# DEMANDE DE BREVET EUROPEEN

(11) **EP 0 887 384 A1**
(43) Date de publication de la demande: **30.12.1998**
(21) Numéro de dépôt: 98401448.0
(22) Date de dépôt: 15.06.1998
(51) Int. Cl.: C08L 95/00

(54) **Mélanges de bitume, de poudrette de caoutchouc et de polymère utilisés comme liant routier**

(30) Priorité: 24.06.1997 FR 9707859
(71) Demandeur: ELF ATOCHEM S.A., 92800 Puteaux, Hauts-de-Seine (FR)
(72) Inventeur: Perret, Patrice, 27470 Serquigny (FR); Lebez, Jean, 27000 Evreux (FR); Montignac, Guillaume, 27300 Bernay (FR)
(74) Mandataire: Neel, Henry

(57) **Abrégé**

La présente invention concerne des mélanges de bitume, de poudrette de caoutchouc et d'au moins un copolymère (A) d'une alphaoléfine et d'au moins un époxyde insaturé tels que :
- la viscosité Brookfield à 180°C selon la norme NFT 76102 (aiguille 27) est inférieure à 1150 m.Pa.s ;
- la différence en valeur absolue des points de ramollissement (température bille/anneau) selon NFT 66008 entre les fractions haute et basse d'un mélange conservé 3 jours à 180°C dans un tube vertical est inférieure ou égale à 5°C.

Ces mélanges sont utiles comme liants routiers.

## Description

La présente invention conceme des mélanges de bitume, de poudrette de caoutchouc et de polymère utilisés comme liant routier.

Plus précisément elle concerne des mélanges dans lesquels le polymère est un copolymère thermoplastique d'une alpha oléfine et d'au moins un époxyde insaturé. Ces mélanges sont très stables au stockage.

Les polymères réticulés tels que les caoutchoucs ne sont pas recyclables en tant que tels parce que la réticulation ou la vulcanisation sont irréversibles à la différence des polymères thermoplastiques. Ainsi les pneus usagés d'automobiles et de poids lourds, les tuyaux usagés en caoutchouc doivent être broyés et utilisés comme charge. La demanderesse a découvert que l'incorporation de ces caoutchoucs broyés (désignés par "poudrette de caoutchouc" dans la suite du texte) en association avec un copolymère spécifique dans des bitumes permettait d'améliorer les propriétés des bitumes. En particulier on augmente la température bille/anneau et on réduit la pénétration sans augmenter trop sa viscosité.

EP 305225 décrit des bitumes dans lesquels on a ajouté 8 à 10 % en poids de poudre de caoutchouc, 4 à 6 % en poids d'huile lourde à caractère naphteno-aromatique et 2 à 3 % d'un catalyseur. Le catalyseur est choisi parmi les polymères à insaturation éthylénique déjà préconisés pour l'incorporation aux bitumes vulcanisés au soufre destinés aux enrobés routiers par exemple les polyisoprènes, polybutadiènes, éthylène-acétate de vinyle, butadiène-styrène...

EP 448425 décrit un procédé d'extrusion de bitumes et de 20 à 95 % en poids de résidus de broyage. Les résidus de broyage sont mélangés au préalable avec le bitume broyé et un compatibilisant qui peut être un copolymère de l'éthylène d'un ester insaturé et soit d'anhydride maléique soit de méthacrylate de glycidyle. L'ensemble est extrudé puis peut être utilisé comme additif de bitumes routiers. Ces résidus de broyage sont définis comme étant l'ensemble des matériaux minéraux et organiques issus du broyage ou du déchiquetage de carcasses d'automobiles, d'appareils électroménagers et de déchets industriels.

Ces arts antérieurs n'ont pas tenu compte de l'augmentation trop forte de la viscosité et surtout ne se sont pas attachés à la stabilité au stockage, condition essentielle pour l'usage des liants routiers sur les chantiers.

Ainsi l'invention concerne des mélanges de bitume, de poudrette de caoutchouc et d'au moins un copolymère (A) d'une alpha oléfine et d'au moins un époxyde insaturé tels que :
- la viscosité Brookfield à 180°C selon la norme NFT 76102 (aiguille de 27) est inférieure à 1150 m.Pa.s ;
- la différence en valeur absolue des points de ramollissement (température bille/anneau) selon NFT 66008 entre les fractions haute et basse d'un mélange 5 conservé 3 jours à 180°C dans un tube vertical est inférieure ou égale à 5°C.

Le bitume (asphalte) utilisé selon la présente invention est un constituant naturel des huiles minérales et des pétroles bruts ; il est obtenu par désasphaltage, par exemple par précipitation au propane, ou par distillation de produits de raffinage (pitch) et/ou de craquage de produits pétroliers. Il peut également être obtenu à partir de goudrons issus du charbon.

Sans sortir du cadre de l'invention, on peut utiliser également un bitume fluxé, par exemple, à l'aide de distillats ou résidus aromatiques ou encore un bitume oxydé ou soufflé à l'air.

La poudrette de caoutchouc provient du broyage d'objets en polymère réticulés (ou vulcanisés) tels que des pneus, des tuyaux, etc...

Selon les objets et leur provenance les différents caoutchoucs sont constitués de produits naturels (essentiellement du polyisoprène) et/ou de produits de synthèse. Certains objets ne contiennent que du caoutchouc naturel, d'autres que du caoutchouc de synthèse et d'autres des mélanges. On peut disposer de poudrettes de toutes compositions, on peut aussi mélanger différentes poudrettes sans sortir du cadre de l'invention.

Ces poudrettes ont généralement des tailles de 0,01à 1 mm.

(A) est un copolymère d'une alpha oléfine comprenant au moins un époxyde insaturé.

L'époxyde insaturé peut être choisi parmi :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate. Avantageusement, on utilise le (méth)acrylate de glycidyle.

Avantageusement (A) comprend aussi des motifs ester d'acide carboxylique insaturé.

L'ester d'acide carboxylique insaturé peut être par exemple un (méth)acrylate d'alkyle, le groupement alkyle pouvant avoir jusqu'à 24 atomes de carbone.

Des exemples d'acrylate ou méthacrylate d'alkyle utilisables sont notamment le méthacrylate de méthyle, l'acrylate d'éthyle, l'acrylate de n-butyle, l'acrylate d'isobutyle, l'acrylate de 2-éthylhexyle.

L'alpha oléfine peut être l'éthylène, le propylène, le butène-1, l'isobutène, le pentène-1, l'hexène-1, le décène-1, le 4-méthylbutène-1, le 4-méthyl pentène, le 4,4-diméthylpentène-1, le vinylcyclohexane, le styrène, le méthylstyrène, le styrène substitué avec des alkyls. Avantageusement, on utilise l'éthylène.

L'époxyde insaturé peut être greffé ou copolymérisé avec l'alpha oléfine et éventuellement l'ester d'acide carboxylique insaturé. On préfère la copolymérisation.

Avantageusement, (A) est un copolymère éthylène / (méth)acrylate d'alkyle dont l'alkyle a de 1 à 10 carbones / (méth)acrylate de glycidyle et contenant jusqu'à 65% en poids de (méth)acrylate et jusqu'à 10% en poids d'époxyde.

De préférence, le (méth)acrylate d'alkyle est 9 à 40% de (A) et l'époxyde 0,1 à 10 %.

Le copolymère (A) peut être utilisé en mélange avec une polyoléfine homo ou copolymère, des copolymères éthylène-acétate de vinyle ou des copolymères éthylène-(méth)acrylate d'alkyle.

Les propriétés des mélanges de l'invention sont mesurées selon les méthodes suivantes :
La pénétration est mesurée selon NFT 66004
   **Charge 50 g** (poids de l'équipage mobile et de l'aiguille)
   Température : 25°C
   Temps de pénétration : 10s
   La pénétration est exprimée en 1/10 mm
   **Charge 100 g** (poids de l'équipage mobile et de l'aiguille)
   Température : 25°C
   Temps de pénétration : 5s.
Le point de ramollissement appellé aussi température bille/anneau est mesuré selon NFT 66008
   Fluide : huile de silicone type 47 V 100
   Montée en température : 5°C/mn.
La viscosite Brookfield est mesurée selon NFT 76102
   Températures : 135, 140, 160, 180°C
   Aiguille : 27
   Vitesses : 2.5, 5, 10, 20, 50, 100 tr/mn.

La vitesse retenue est celle qui est adaptée à la viscosité du mélange et qui nous permet d'obtenir le couple le plus proche possible de 50 % du couple maxi de l'appareil.

### Stabilité au stockage (méthode interne)

### Procédure

- couler les mélanges dans des tubes en Pyrex
- faire vieillir en étuve à 180°C en position verticale pendant 3 jours
- procéder à l'analyse des parties hautes et basses de l'échantillon afin de déterminer si il y a eu une démixtion. Cette analyse se fait par différence de température de ramollissement (bille/anneau).

### Interprétation

On cherche à obtenir des formulations stables au stockage (sans démixtion) c'est-à-dire des échantillons pour lesquels il n'y a pas de différence de phase entraînant une différence de température de ramollissement (bille/anneau) entre le haut et le bas du tube de plus de 5°C.

La demanderesse a découvert que des quantités de poudrette de caoutchouc de l'ordre de 20 % en poids associées à une quantité suffisante de (A) pour obtenir une bonne stabilité au stockage conduisaient à des viscosités trop importantes.

Des quantités de poudrette de caoutcouc de l'ordre de 5 % en poids peuvent être utilisées sans copolymère (A) les mélanges sont stables mais la température bille/anneau ainsi que la résistance à la pénétration sont insuffisantes.

Les compositions de l'invention présentent une température bille/anneau d'environ 13 à 20°C supérieure à celle du bitume seul. Elles présentent aussi une pénétration (sous 50 g) améliorée d'environ 15 à 35 points (c'est-à-dire en 1/10 mm) par rapport à celle du bitume seul et de préférence 20 à 30 points.

Les poudrettes constituées essentiellement de caoutchouc naturel conduisent à une bonne résistance à la pénétration plutôt dans la partie basse de la fourchette précitée mais conduisent à une amélioration de la température bille/anneau dans la partie basse de la fourchette. C'est pourquoi on préfère les poudrettes comprenant un mélange de caoutchouc naturel et de caoutchouc synthétique ces mélanges peuvent contenir 20 à 80 % en poids de caoutcouc naturel.

L'augmentation de la teneur en poudrette ou de la teneur en copolymère (A) provoque une diminution de la pénétration accompagnée d'une augmentation de la viscosité.

La quantité de poudrette est avantageusement de l'ordre de 7 à 13 % en poids (du mélange bitume - poudrette - copolymère (A)).

La quantité de polymère (A) est la quantité suffisante pour que le mélange de l'invention soit stable. Cette quantité peut être par exemple de 0,5 à 5 % en poids et de préférence 1 à 2 % (du mélange bitume - poudrette - copolymère (A)).

Avantageusement la quantité de motifs à fonction époxyde de (A) est de 1 à 10 % en poids.

Ces mélanges de l'invention peuvent être réalisés dans tout dispositif mélangeur et en particulier les machines utilisées habituellement dans l'industrie des bitumes. Les mélanges de l'invention sont particulièrement utiles soit comme liants routiers c'est-à-dire un mélange à raison de 5 à 10 % en poids avec des granulats pour faire des revêtements de route ou comme bitume d'étanchéité pour des constructions.

### Exemples

Les mélanges bitume / terpolymère / poudrette de caoutchouc recyclé sont réalisés avec un mélangeur à hélice GRENIER-CHARVET (vitesse de rotation de l'hélice : 400 tr/mn) sur un banc chauffant à 180°C pendant deux heures et demie.

On utilise les produits suivants :
**Bitumes**
NYNAS
TOTAL
ELF

Les propriétés sont indiquées dans le tableau 1.

### Copolymère (A)

AX07 désigne un copolymère de l'éthylène, de l'acrylate de méthyle et du méthacrylate de glycidyle de proportions en poids 67/26/7 et d'indice de fluidité (ou Melt Index MI) 6 à 190°C - 2,16 kg (ASTM D 1238).

AX01 désigne un copolymère de l'éthylène, de l'acrylate de méthyle et du méthacrylate de glycidyle de proportions en poids 71/28/1 et de Ml 6 à 190°C - 2,16 kg (ASTM D 1238).

AX02 désigne un copolymère de l'éthylène, de l'acrylate de butyle et du méthacrylate de glycidyle de proportions en poids 68/30/2 et de Ml 6 à 190°C - 2,16 kg (ASTM D 1238).

### Poudrette de caoutchouc

PC1 taille 0,2 - 0,8 mm provenant de pneus de poids lourds et constituée essentiellement de caoutchouc naturel et comprend aussi du SBR et du polybutadiène.

PC2 taille 0,01 à 1 mm contenant 70 % (poids) de caoutchouc naturel et 30 % caoutchouc synthétique (SBR, polybutadiène).

Les résultats sont rassemblés dans le tableau 1. La première ligne "% poids" concerne respectivement les % de poudrette et de copolymère (A).

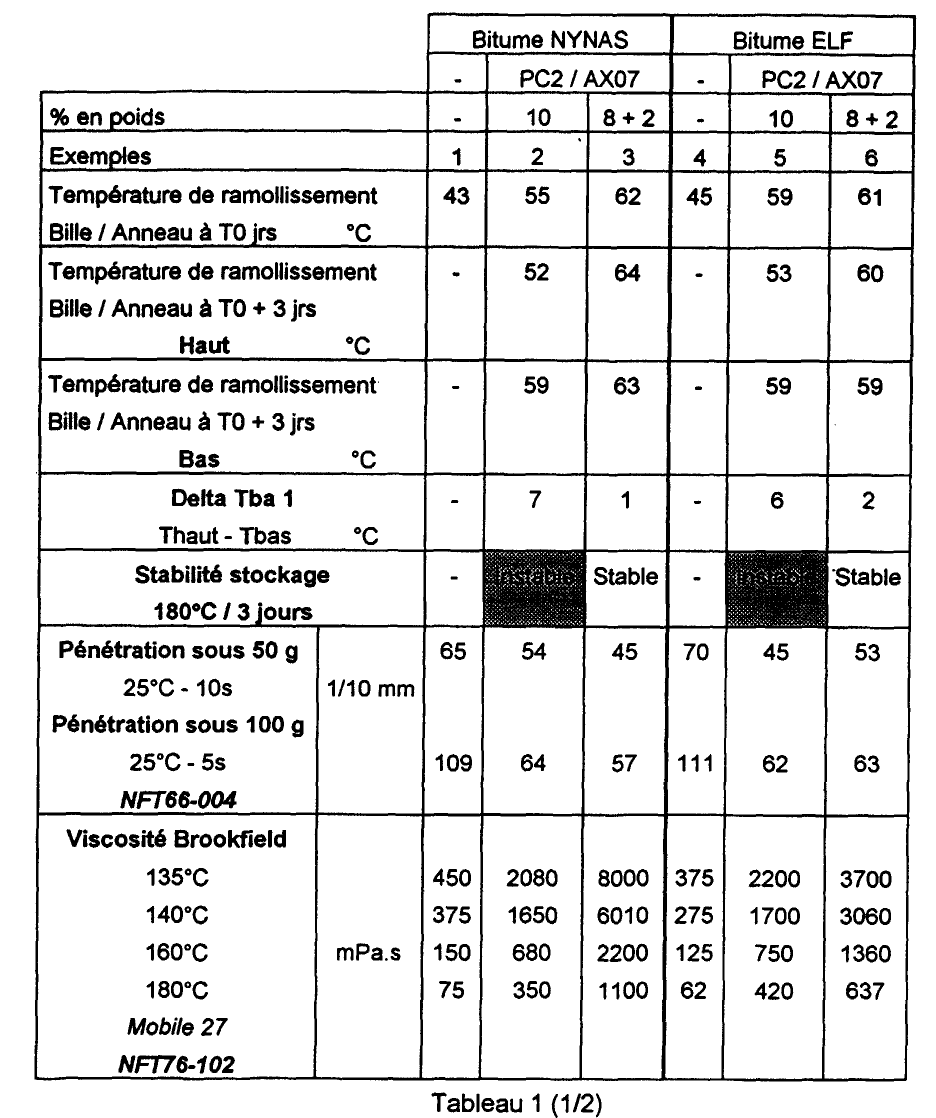

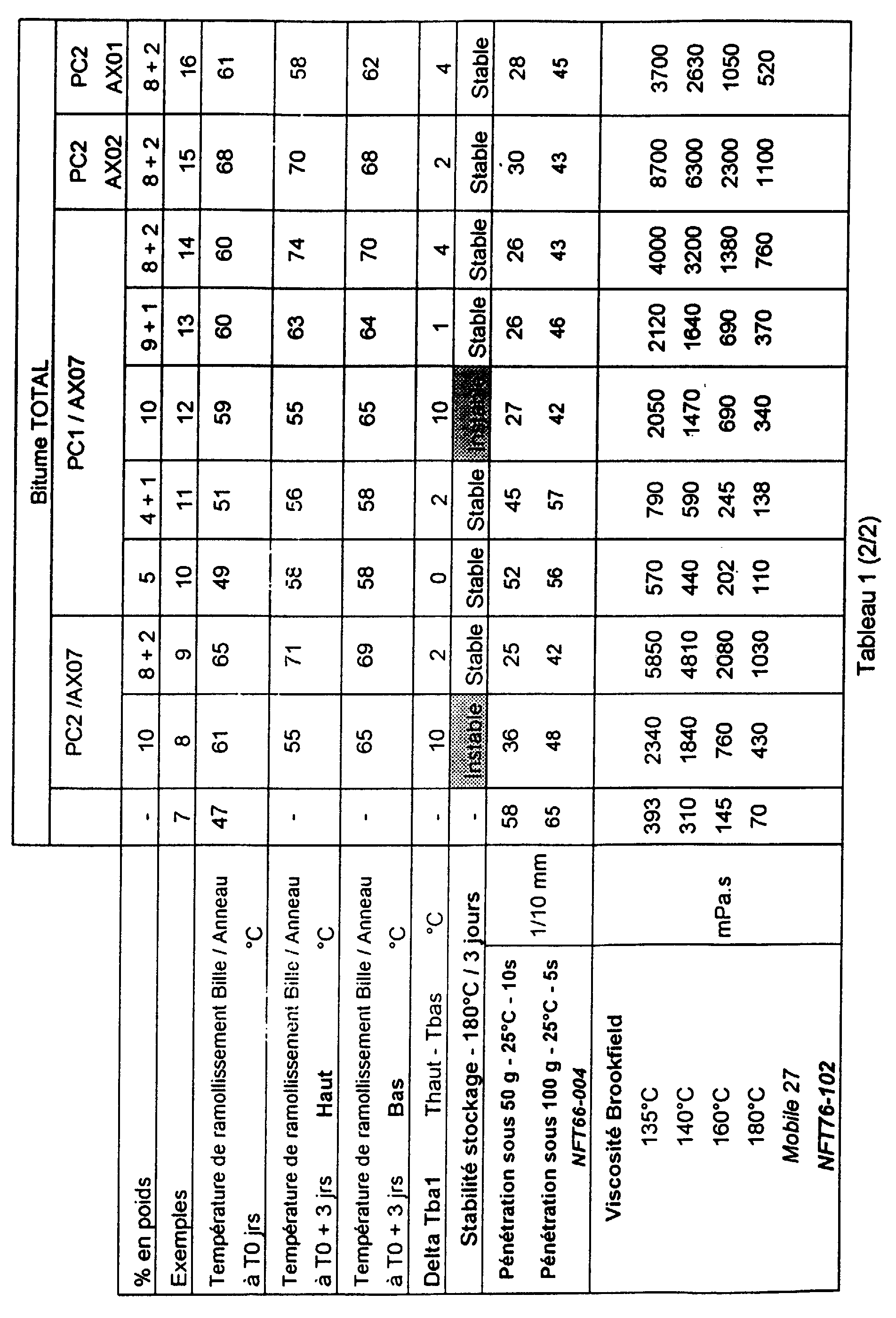

## Revendications

1. Mélanges de bitume, de poudrette de caoutchouc et d'au moins un copolymère (A) d'une alphaoléfine et d'au moins un epoxyde insaturé tels que :
- la viscosité Brookfield à 180°C selon la norme NFT 76102 (aiguille 27) est inférieure à 1150 m.Pa.s ;
- la différence en valeur absolue des points de ramollissement (température bille/anneau) selon NFT 66008 entre les fractions haute et basse d'un mélange conservé 3 jours à 180°C dans un tube vertical est inférieure ou égale à 5°C.

2. Mélanges selon la revendication 1 dans lesquels le copolymère (A) est un copolymère de l'éthylène d'un (méth)acrylate d'alkyle et du (méth)acrylate de glycidyle.

3. Mélanges selon l'une quelconque des revendications précédentes dans lesquels la température bille/anneau est supérieure de 13 à 20°C de celle du bitume seul.

4. Mélanges selon l'une quelconque des revendications précédentes dans lesquels la pénétration est améliorée d'environ 15 à 35 points (1/10 mm) par rapport à celle du bitume seul.

5. Mélanges selon l'une quelconque des revendications précédentes dans lesquels la quantité de poudrette est de 7 à 13 % en poids des mélanges.

6. Mélanges selon l'une quelconque des revendications précédentes dans lesquels la poudrette contient un mélange de caoutchouc naturel et de caoutchouc synthétique.

7. Mélanges selon l'une quelconque des revendications précédentes dans lesquels la quantité de (A) est de 1 à 2 % en poids des mélanges.

8. Mélanges selon l'une quelconque des revendications précédentes dans lesquels la quantité de motifs époxyde est de 1 à 10 % en poids de (A).
